# EUROPEAN PATENT APPLICATION

(11) **EP 0 885 801 A1**
(43) Date of publication of application: **23.12.1998**
(21) Application number: 98830258.4
(22) Date of filing: 28.04.1998
(51) Int. Cl.: B62D 55/24, B62D 55/253

(54) **Track with ropes fastened by heading**

(30) Priority: 16.06.1997 IT MI970437 U
(71) Applicant: Baiardo, Ernesto, 20010 Vanzago (Milano) (IT)
(72) Inventor: Baiardo, Ernesto, 20010 Vanzago (Milano) (IT)
(74) Representative: Mercurio, Franco

(57) **Abstract**

The present invention relates to a track with ropes (10) which can be installed on a number of industrial vehicles and consisting of adjoining members (15, 15') connected with each other by means of metal ropes (16, 17) respectively housed in through-holes (18 and 19) through these members and fastened to said members (15, 15') by heading of the latter at the holes. Ropes (16, 17) and members (15, 15') form a metal frame which is buried in a rubber cover.

## Description

### Technical field

The present invention relates to a track with closed-ring ropes, of the type consisting of adjoining members, and which is obtained by connecting adjoining members to each other. Said tracks can be installed on a number of industrial vehicles, provided for instance with buckets, excavators, hammers and similar devices.

### Background art

Closed-ring tracks only consisting of metal members hinged to one another, and which have the disadvantage of being noisy and of damaging streets, are known.

There are also tracks made up of metal members with thin superimposed rubber plates that are bolted onto them. However, also in this case, this solution suffers from a number of drawbacks, such as being more expensive and labour-intensive.

There is also known a type of track, protected by the Italian utility model application no. MI96/U000056 filed by the present applicant and comprising members provided with side supports with holes, such as pin housings for connecting the various members, the whole assembly being coated with moulding rubber. Though this solution has some advantages as compared with the above-mentioned tracks, it can however disadvantageously be rather expensive.

Another known track is described in the utility model application no. MI93/U001005 filed by the present applicant, which comprises thin plates fastened to spaced members and coated with a tread. In this case it is possible that the continuous bending of the thin plates results in their breaking.

There can also be mentioned tracks provided with steel wires buried in the rubber without being fastened to said spaced metal members with the disadvantage that the wires slide and can therefore shear the rubber.

Moreover, the track described in the utility model application no. MU96/U000445 filed by the present applicant, consisting of a track made up of members connected to each other by means of ropes fastened to the members by bolts, offers the advantage of having a long life and of supporting heavy loads without track's elongation, however its construction is expensive since the assembly of the various parts takes longer.

### Disclosure of the invention

The track with ropes of the present invention allows the above-mentioned drawbacks to be eliminated and is especially advantageous because its construction and assembly are simple, and the connection of both ends of each rope can be easily accomplished, thus making the track cheaper than the known types.

These and other advantages will be disclosed in detail in the following description of an illustrative, non-limiting embodiment with reference to the attached drawings in which:
FIGURE 1 is a schematic side view of a track with closed-ring ropes;
FIGURE 2 is an enlarged plan view of a part of figure 1 according to arrow A;
FIGURE 3 is a cross-section view taken along line III-III in figure 2, without assembled ropes;
FIGURE 4 is a cross-section taken along line IV-IV in figure 3; and
FIGURE 5 is a cross-section detail according to line V-V in figure 2, with the heading implement.

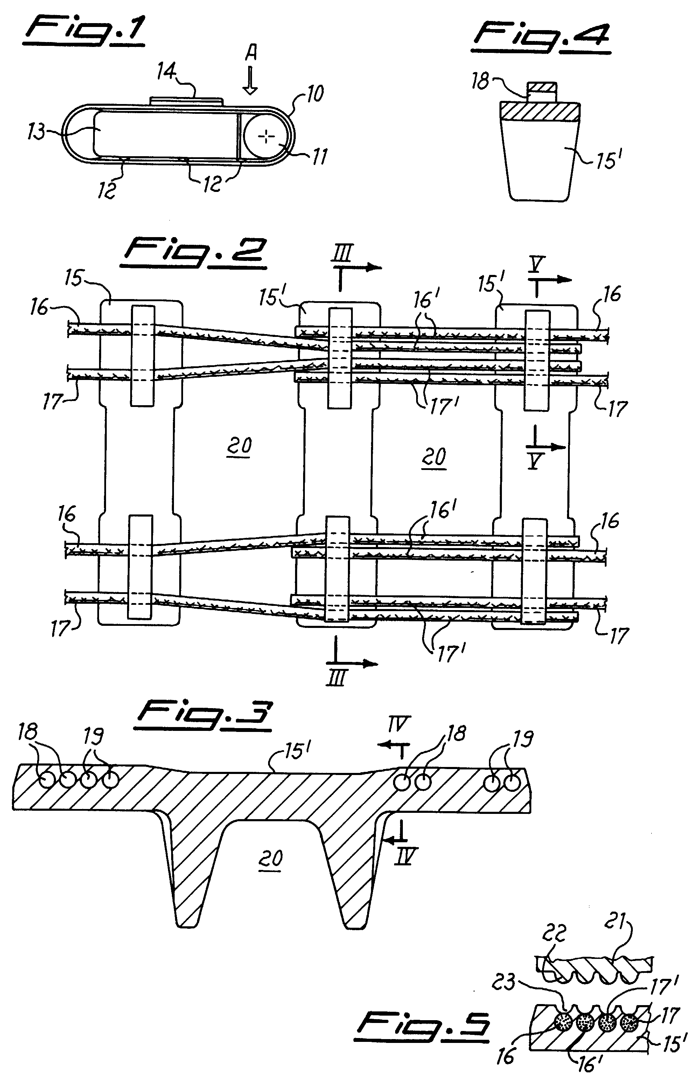

As it can be seen in figure 1, the track 10, having the features which will be described in detail hereinafter, is wound in the shape of a closed ring onto a driving gear wheel 11 and onto idle pulleys 12. A similar track, not shown in the figure, is parallel to and adjoining the above track 10 so that pulleys 12 hold a frame 13 provided with a support 14 carrying a control cabin (not shown), which in turn is connected with tools such as buckets, excavators, hammers and the like (also not shown).

As it can be seen in figures 2, 3, 4 and 5, the present track comprises members 15 whose opposite ends carry one or more metal ropes 16 and 17 which are wound according to the development of track 10.

Said members 15 have through-holes 18, 19 housing ropes 16, 17, which are in their turn fastened to members 15 by heading of the members near said holes 18, 19.

Each couple of members 15 creates a central space 20 for coupling with the driving gear wheel 11. Said fastening of ropes 16 and 17 to members 15 by heading is accomplished by means of an implement 21 provided with projections 22 which, upon lowering of the implement, form headings 23 on the upper surface of each member 15, thus resulting in the fastening of ropes 16 and 17 to said member.

In order to close each rope in the shape of a ring, both ends 16', 17' of each rope, as it can be seen in figure 2, are arranged next to each other and housed in one or more socket members 15', similar to members 15, with said ends 16', 17' of each rope housed in two adjoining holes 18, 19. Also in the case of ends 16', 17', the fastening of the latter to the socket members 15' is accomplished by heading members 15' near the adjoining holes 18 and 19 by means of the implement 21.

As it can be seen in figures 2 and 3, on the opposite sides of each socket member 15', the ends 16' and 17' of each rope are brought closer to or spaced from the other rope or ropes housed on the same side of each socket member 15'.

The metal frame consisting of members 15 and 15' and of ropes 16 and 17 fastened to said members is contained in a rubber cover having an external tread part and an internal part shaped in such a way as to leave a central space 20 between each adjoining member for coupling the teeth of the driving wheel 11 to said members 15 and 15'.

Said heading onto all members 15 and 15' provides the track with the maximum resistance on the whole circumference and it is noteworthy that the members are uniformly spaced, thus determining the advancememt pitch of the track upon rotation of the driving gear wheel 11 and keeping an equal force on each member by the mentioned driving gear wheel 11.

On the basis of the above description it is easy to note the various advantages of the present invention to which practical and structural changes can be made without departing from the scope of the present invention as claimed hereinafter.

## Claims

1. A track having closed-ring ropes (16, 17) connected with members (15) that are spaced from one another so that each couple of members (15) creates a central space (20) for the coupling with a driving gear wheel (11), ropes (16, 17) and members (15) thus forming a metal frame which is closed in a rubber cover, characterized in that said members (15) have through-holes (18, 19) housing ropes (16, 17) which are fastened to the members (15) by heading of the members at said holes (18, 19).

2. A track as claimed in claim 1, characterized in that the opposite sides of each member (15) carry one or more ropes (16, 17).

3. A track according to any of claims 1, 2, characterized in that, for closing each rope in the shape of a ring, both ends (16', 17') of each rope are arranged adjoining each other and housed in one or more socket members (15'), which are similar to members (15).

4. A track according to claim 3 characterized in that said two ends (16', 17') of each rope are housed in two adjoining holes (18, 19) of each socket member (15').

5. A track according to any of claims 3, 4, characterized in that said two ends (16', 17') are fastened to socket members (15') by heading of the socket members (15') near said adjoining holes (18, 19).

6. A track according to any of claims 3, 4, 5, characterized in that on the opposite sides of each socket member (15'), the ends (16', 17') of each rope are brought closer to or spaced from the ends of the other rope or ropes arranged on the same side of each socket member (15').

7. A track according to any of claims 3, 4, 5 and 6, characterized in that the members (15, 15') are uniformly spaced, thus determining the advancememt pitch of the track upon rotation of the driving gear wheel (11).
